# EUROPEAN PATENT APPLICATION

(11) **EP 1 426 162 A1**
(43) Date of publication of application: **09.06.2004**
(21) Application number: 03026870.0
(22) Date of filing: 24.11.2003
(51) Int. Cl.: B29C 47/00, B29C 47/06, B65D 65/40

(54) **Tearable plastic film particularly for flexible packagings**

(30) Priority: 05.12.2002 IT PD20020310
(71) Applicant: Alcan Packaging Italia S.r.l., 36030 Lugo di Vicenza (IT)
(72) Inventor: Zaggia, Carlo Alberto, 36100 Vicenza (IT); Razeti, Marco, 35100 Padova Località Mandria (IT)
(74) Representative: Modiano, Guido, Dr.-Ing.

(57) **Abstract**

A tearable film of plastic material particularly for flexible packagings, comprising a plastic polymer that is extruded with flat-die or blown-film technologies with the addition of 1 to 50% by weight of inorganic material in powder form.

## Description

The present invention relates to a tearable plastic film particularly for flexible packagings.

Tearability is a very important characteristic in flexible packagings, and particularly in packagings known as inherently stable or stand-up packagings, which tend to replace cans and must combine adequate rigidity with easy opening.

As it is known, there is an increasing demand for packagings for precooked food that is ready for use or to be heated in microwave ovens.

To ensure the preservation of these foods, it is often necessary to sterilize them (usually with steam) after packaging.

For such applications, flexible packagings with easy opening are particularly appreciated and tearability is a sought-after characteristic.

The type of tearing, moreover, must be controlled, i.e. propagation should be orientable if possible.

Tearability depends on the degree of crystallinity of the plastic material and on the arrangement of the crystals, and currently this is a function of the physical and chemical characteristics of each plastic material and of the parameters of the process that produces the films used in flexible packagings.

Tearability is a characteristic that is sensitive to extrusion speed and to the type of cooling.

In practice, if a cast machine is used, by reducing the extrusion speed and/or decreasing the cooling shock (by increasing the distance between the extruder and the chill roll), crystallization is facilitated and therefore tearability increases.

However, this means that the process becomes slow and the product is affected negatively by this, due to a consequent cost increase.

The aim of the present invention is to provide a plastic film particularly for flexible packagings that has the characteristic of tearability thanks to its chemical and physical characteristics, regardless of the methods and parameters of its production process.

Within this aim, an object of the present invention is to provide shorter production times and reduce product costs.

A further object of the present invention is to provide a plastic film for flexible packagings in which tearability does not compromise the heat-sealability and sterilizability characteristics.

Another object of the present invention is to provide a tearable film made of plastic material, particularly for flexible packagings, that has at the same time an increase in rigidity.

Another object of the present invention is to provide a tearable plastic film particularly for flexible packagings that has a competitive cost with respect to known tearable films.

Another object of the present invention is to provide a tearable plastic film particularly for flexible packagings that can be obtained with conventional extrusion equipment and facilities.

This aim and these and other objects that will become better apparent hereinafter are achieved by a tearable plastic film particularly for flexible packagings, characterized in that it comprises a plastic polymer, extruded with flat-die or blown-film technologies, which receives the addition of 1 to 50% by weight of inorganic material in powder form.

Further characteristics and advantages of the present invention will become better apparent from the following detailed description of an embodiment thereof, described by way of nonlimiting example hereafter.

A tearable plastic film particularly for flexible packagings is constituted by a plastic polymer, such as polypropylene or polyethylene, with the addition of 1 to 50% by weight of talc or other inorganic material such as calcium carbonate or kaolin.

Practical tests have in fact demonstrated that the use of fillers constituted by talc or other inorganic substances, such as for example calcium carbonate or kaolin, in the production of plastic materials has the effect of facilitating their crystallization, acting as nucleating agents during cooling, when the polymer passes from the molten state to the solid state.

By adding the inorganic substances cited above to the polymeric resins, a fine mixing of the two phases is obtained during the extrusion step: during the subsequent cooling step, the polymer begins to crystallize around the inorganic particles.

At the same time, the rearrangement of the lamellar crystalline structures into larger spherulitic nuclei is also facilitated.

Tearing, like many mechanical perturbations that can be induced in plastic materials, in the case of materials filled with inorganic substances propagates at the interface between the spherulite and the amorphous phase; higher crystallinity produces improved tearability.

Practical tests have shown that an amount of inorganic material being around or approximately 3-5% by weight, in any case variable as a function of the material and of the operating parameters, is preferable.

The film has, with respect to the standard (produced with the same process but without the inorganic filler) a considerable improvement in tearability, both before and after steam sterilization, as shown by the following table, and this characteristic has a substantially linear propagation for the identified amount of filler.

The following table reports the results of tests conducted on a standard film A with a thickness of 70 microns, produced without filler, and on two films B and C, with a thickness of 70 and 60 microns, respectively, produced with a 3% talc filler, in which:
MD = direction of advancement of the film in the machine (extruder)
TD = direction at right angles to the machine

| Sample | Thickness (microns) | Amount of filler | Before sterilization | | | After sterilization | | |
|---|---|---|---|---|---|---|---|---|
| | | | Rigidity mN | Tearing force N | Tearing deviation % | Rigidity mN | Tearing force N | Tearing deviation % |
| A | 70 | None | MD: 280 TO: 250 | 8.3 | 12.6 | MD: 205 TD: 195 | 12.7 | 10.2 |
| B | 70 | 3% talc | MD: 318 TD: 286 | 5 | 4.8 | MD: 290 TD: 275 | 2 | 1.4 |
| C | 60 | 3% talc | MD: 244 TD: 216 | 1.6 | 1.6 | MD: 290 TD: 275 | 2 | 2.4 |

Moreover, the type of tearing obtained is controlled, in that propagation is better when it can be orientated in a preset direction, in order to facilitate the use of tearable films for ordinary needs of users, such as for example in the case of precooked food, to have a simple and tidy opening of the package and easy manual operations during emptying of the contents.

The appropriate balancing of the amount of nucleating agent (the inorganic material) achieves an optimum size of the crystallites that increases tearability and improves the orientation of its propagation in the film obtained by extrusion, due to the regularity of the crystals and most of all to the reduction of the "amorphous" domain.

Among the available production technologies, coextrusion is assuredly to be privileged, since it allows to isolate in the internal layers the intended amount of nucleating fillers, preventing them from interfering with the thermal properties of the heat-sealing layer or with the surface properties of the layer to be coupled.

By way of example, in a cast coextruder provided with three screw feeders, a polypropylene resin (homopolymer or copolymer) is fed into the three loading hoppers.

The talc is added to the plastic material in the central hopper.

The result is a three-layer film, in which the inorganic filler (therefore the spherulitic nuclei) is confined in the central layer, therefore in a region that is not affected by the heat-seal required to obtain a sealed flexible packaging.

In other cases it is possible to provide a two-layer film in which the inorganic filler is confined in the layer that is subsequently not affected by the heat-seal.

The described film is suitable for lamination with the most different materials, such as plastic films (even oriented and printed ones), aluminum foil, and others.

Combination with these additional films maintains and generally increases the improved and substantially linear tearing properties of the film.

In practice it has been found that the intended aim and objects of the present invention have been achieved.

The film described above in fact becomes extremely important in the specific field of flexible packaging, since it can combine a plurality of important properties and, among these, tearability and tear propagation, which is fundamental for packagings made of flexible material, such as for example so-called stand-up pouches, in order to allow simple and regular opening of the package and to facilitate manual operations during emptying of the content.

Moreover, by associating the nucleation effect produced by the inorganic fillers with an extrusion process that produces an orientation of the film, the linear propagation of tearing is improved further; tearing can be induced in a region with a pre-cut.

By providing this film it is also possible to increase extrusion efficiency by obtaining tearability independently of the process method, particularly in cast machines (it is possible to increase the extrusion speed without compromising tearability).

Moreover, in the case of polypropylene films, sterilizability is not compromised even after autoclave treatment to provide hermetic packages.

The use of the film also allows to ensure the same rigidity by using reduced thicknesses, with a consequent cost saving.

Another potential saving in the overall cost of the film arises from the fact that the inorganic fillers are cheaper than the plastic material.

The film can be obtained on any extrusion line and in any case with the use of standard technologies that do not require further or particular modifications.

No investment is required to update the extrusion line, the processing (printing and lamination) machines, and the packaging machines, having in any case available a product whose characteristics are constant and reproducible without the need for further purchases of machines and components (laser systems, mechanical systems, and so forth).

The invention thus conceived is susceptible of numerous modifications and variations, all of which are within the scope of the appended claims.

All the details may further be replaced with other technically equivalent elements.

In practice, the materials employed, so long as they are compatible with the contingent use, as well as the dimensions, may be any according to requirements.

The disclosures in Italian Patent Application No. PD2002A000310 from which this Application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tearable film made of plastic material, particularly for flexible packagings, **characterized in that** it comprises a plastic polymer that is extruded with flat-die or blown-film technologies and receives the addition of 1 to 50% by weight of inorganic material in powder form.

2. The film according to claim 1, **characterized in that** said plastic polymer is selected in a group comprising polypropylene and polyethylene.

3. The film according to claim 1, **characterized in that** said inorganic material is selected in a group comprising talc, calcium carbonate and kaolin.

4. The film according to claim 1, **characterized in that** said addition is approximately 3-5% by weight.

5. The film according to one or more of the preceding claims, **characterized in that** it is laminated with films selected among films made of plastic materials and aluminum foil.

6. The film according to one or more of the preceding claims, **characterized in that** it is a three-layer coextruded film in which the inorganic filler is confined to the central layer.

7. The film according to one or more of claims 1 to 5, **characterized in that** it is a two-layer coextruded film in which the inorganic filler is confined to only one of the layers.
